# FASCICULE DE BREVET EUROPEEN

(11) **EP 0 768 106 B1**
(45) Date de publication et mention de la délivrance du brevet: **21.01.2004**
(21) Numéro de dépôt: 96402007.7
(22) Date de dépôt: 20.09.1996
(51) Int. Cl.: B01D 5/00, C10L 3/10, F25J 3/06

(54) **Procédé de fractionnement d'un fluide contenant plusieurs constituants séparables, tel qu'un gaz naturel**
Verfahren zur Fraktionierung eines mehrere trennbare Komponenten enthaltenden Fluids wie z.B. Erdgas
Process for fractionating a fluid containing separable multi-components, e.g. a natural gas

(30) Priorité: 11.10.1995 FR 9512003
(43) Date de publication de la demande: 16.04.1997
(73) Titulaire: Institut Français du Pétrole, 92502 Rueil-Malmaison (FR)
(72) Inventeur: Collin, Jean-Claude, 78540 Marsinval-Verneuil (FR); Rojey, Alexandre, 92500 Rueil Malmaison (FR)

(56) Documents cités:
- EP-A- 0 553 706
- FR-A- 992 599
- GB-A- 669 104
- US-A- 4 726 826

## Description

La présente invention a pour objet un procédé de fractionnement d'un fluide constitué d'au moins une phase gazeuse et de plusieurs constituants présentant une caractéristique permettant de les différencier dans les conditions opératoires du procédé. Le procédé selon l'invention met en oeuvre deux échangeurs de chaleur à plaques.

Certains fluides comprennent des constituants pouvant être différenciés par au moins une caractéristique ou un paramètre dans les conditions du procédé et, notamment, par leur valeur de température d'ébullition ou de condensation.

La présente invention s'applique particulièrement bien au fractionnement des gaz naturels, des gaz associés à des condensats d'hydrocarbures ou des gaz issus du traitement de fractions pétrolières. Tous ces gaz comportent au moins du méthane et des hydrocarbures en teneur variable, tel que l'éthane ou l'éthylène, et les hydrocarbures supérieurs (C₃ ou plus).

Dans la suite de la description, on désigne par C₃+ l'ensemble des hydrocarbures comportant au moins trois atomes de carbone, par C₄+ l'ensemble des hydrocarbures comportant au moins quatre atomes de carbone, et par C₅+ l'ensemble des hydrocarbures comportant au moins cinq atomes de carbone.

De la même façon, on désigne par l'expression "le gaz traité' un gaz appauvri au moins en hydrocarbures lourds.

L'art antérieur décrit différents procédés et installations industrielles permettant d'extraire de manière sélective l'éthane et les composés plus lourds que l'éthane, ou le propane et les composés plus lourds que le propane.

Dans la plupart des cas, le gaz à traiter est partiellement condensé par réfrigération à basse température, puis séparé dans un ballon séparateur. La phase liquide formée par condensation, est ensuite traitée dans une colonne de distillation classique, et on récupère au fond de cette colonne et sous forme liquide, le ou les composés lourds de la charge que l'on souhaite obtenir, et en tête de colonne la phase gazeuse.

Le dispositif décrit dans le brevet FR 2.571.129 comporte un échangeur dans lequel, on réalise simultanément la réfrigération et la rectification de la phase gazeuse. Ce procédé ne permet pas d'extraire dans la même unité soit une fraction de GPL et la gazoline formée par une fraction C₅+, soit l'éthane et une fraction de GPL ou une fraction gazoline.

La méthode décrite dans le brevet US 4.726.826 propose de refroidir le gaz par échange de chaleur en une ou plusieurs étapes pour condenser et séparer les constituants les moins volatiles.

Dans le brevet FR 2.578.637 l'installation de fractionnement comporte une enceinte de condensation partielle du gaz, un échangeur avec rectification simultanée du gaz et une colonne de fractionnement. Il est possible de réaliser l'extraction de la coupe C₃+ avec des rendements supérieurs à 95%. Néanmoins, l'utilisation de trois dispositifs différents augmente le coût et l'encombrement de l'installation de traitement du gaz.

Les installations de fractionnement d'un gaz décrits dans l'art antérieur comprennent, dans la majorité des cas, plusieurs dispositifs qui augmentent l'encombrement des unités de traitement et les coûts du traitement.

Le but de l'invention est de proposer un procédé pour traiter et/ou fractionner un gaz naturel comportant au moins deux constituants présentant un paramètre qui permet de les distinguer ou de les séparer au cours du procédé à l'aide de moyens appropriés.

Le gaz naturel comporte au moins deux constituants condensables dont les températures d'ébullition ou de condensation sont différentes.

Le procédé mis en oeuvre selon l'invention, permet de fractionner le gaz en produisant de manière sélective un ou plusieurs de ses constituants et, en même temps, de procéder à leur récupération en fonction de leur composition et/ou de la demande du producteur.

Simultanément au cours de l'opération de fractionnement, il est possible d'effectuer un traitement du gaz naturel, autre que le fractionnement, par exemple sa déshydratation en utilisant un produit adapté, tel qu'un solvant.

Ainsi la présente invention concerne un procédé de fractionnement d'un gaz naturel comportant de l'eau, du méthane et des hydrocarbures condensables, caractérisé en ce que :
- on introduit le gaz naturel dans un premier échangeur de chaleur à plaques, le gaz circulant en direction ascendante,
- dans le premier échangeur, on refroidit le gaz par échange de chaleur indirect pour provoquer la condensation d'une première fraction liquide et, simultanément, ledit gaz est en contact avec la première fraction liquide et avec une partie d'une quatrième fraction liquide provenant d'un deuxième échangeur de chaleur à plaques, la première fraction liquide et ladite partie de la quatrième fraction liquide circulant à contre-courant du gaz,
- on soutire, une troisième fraction liquide en fond du premier échangeur et une première fraction gazeuse en tête du premier échangeur,
- on introduit la première fraction gazeuse dans le deuxième échangeur, la première fraction gazeuse circulant en direction ascendante,
- dans le deuxième échangeur, on refroidit la première fraction gazeuse pour provoquer la condensation d'une deuxième fraction liquide et, simultanément, ladite première fraction gazeuse est en contact avec ladite deuxième fraction liquide, la première fraction gazeuse circule à contre-courant de la deuxième fraction liquide,
- on soutire, la quatrième fraction liquide d'une partie du liquide en fond du deuxième échangeur et une deuxième fraction gazeuse en tête du deuxième échangeur.

Le refroidissement peut être réalisé par échange de chaleur indirect entre un fluide caloporteur et le gaz circulant dans le premier et deuxième échangeur de chaleur, ledit fluide caloporteur circulant à contre courant dudit gaz.

Le fluide caloporteur peut consister en ladite deuxième fraction gazeuse.

On peut injecter un solvant dans au moins un des échangeurs de chaleur.

On peut effectuer un traitement permettant de stabiliser au moins une des fractions liquides prélevées, en la débarrassant des hydrocarbures les plus légers.

Le procédé selon l'invention permet avantageusement de :
- fractionner un gaz naturel en fonction de la demande du producteur et éventuellement des conditions de transport (conduites et réseau de transport déjà en place),
- de recueillir avec un rendement plus élevé des condensats qui sont des produits ayant une plus grande valeur (C₂+, C₃+, ....essence,...etc),
- de diminuer l'encombrement des installations de traitement et les investissements.

D'autres avantages et caractéristiques de l'invention apparaîtront mieux à la lecture de la description donnée à titre d'exemples de réalisation, dans le cadre du traitement d'un gaz naturel, en se référant aux dessins annexés où :
- la figure 1 schématise un schéma de base d'un dispositif de fractionnement équipé de moyens de séparation,
- la figure 2 est une variante de réalisation du dispositif de la figure 1 comportant deux moyens de séparation et de prélèvement des phases séparées,
- les figures 3 et 4 montrent des installations comportant un dispositif de fractionnement associé à un dispositif de stabilisation des phases séparées,
- la figure 5 représente un dispositif pour optimiser la stabilisation des fractions récupérées,
- les figures 6 et 7 montrent deux variantes de réalisation d'un circuit de réfrigération assurant la séparation des fractions d'hydrocarbures,
- les figures 8A et 8B représentent des variantes de réalisation du dispositif de la figure 1 muni d'un conduit d'introduction d'un solvant ou d'un fluide autre que le gaz à traiter,
- les figures 9 et 10 sont un exemple d'échangeur à plaques,
- la figure 11 présente un schéma de fonctionnement d'un échangeur de chaleur à plaques.

Le procédé mis en oeuvre selon l'invention consiste à fractionner un gaz naturel comportant plusieurs constituants qui peuvent être différenciés par au moins un paramètre dans les conditions opératoires du procédé, par exemple leur température d'ébullition.

Il est ainsi possible de séparer les hydrocarbures composant un gaz naturel, en obtenant des fractions liquides de volatilité différente, par exemple la fraction GPL qui comprend le propane et les butanes (hydrocarbures à trois ou quatre atomes de carbone) et la gazoline représentant la fraction C5+.

Avantageusement, le fractionnement du gaz est réalisé dans une enceinte comportant plusieurs échangeurs de chaleur à plaques distincts dans lesquels s'effectue la condensation des fractions hydrocarbures et des moyens de prélèvement séparant ces échangeurs. Le fractionnement est réalisé par échange thermique entre le gaz et un fluide de réfrigération et par transfert simultané et continu de matière entre la phase gazeuse et la phase liquide condensée.

Ainsi, pour un gaz naturel riche en hydrocarbures autres que le méthane, l'installation permet de fractionner et récupérer des fractions d'hydrocarbures liquides de compositions différentes, en fonction de la composition du gaz traité et de la demande du producteur.

L'enceinte de fractionnement peut être associée à d'autres moyens pour effectuer un traitement du fluide autre que le fractionnement.

Par exemple des moyens permettant d'introduire un fluide jouant le rôle de solvant et/ou d'autres fluides ou encore des moyens de stabilisation, des fractions d'hydrocarbures séparées.

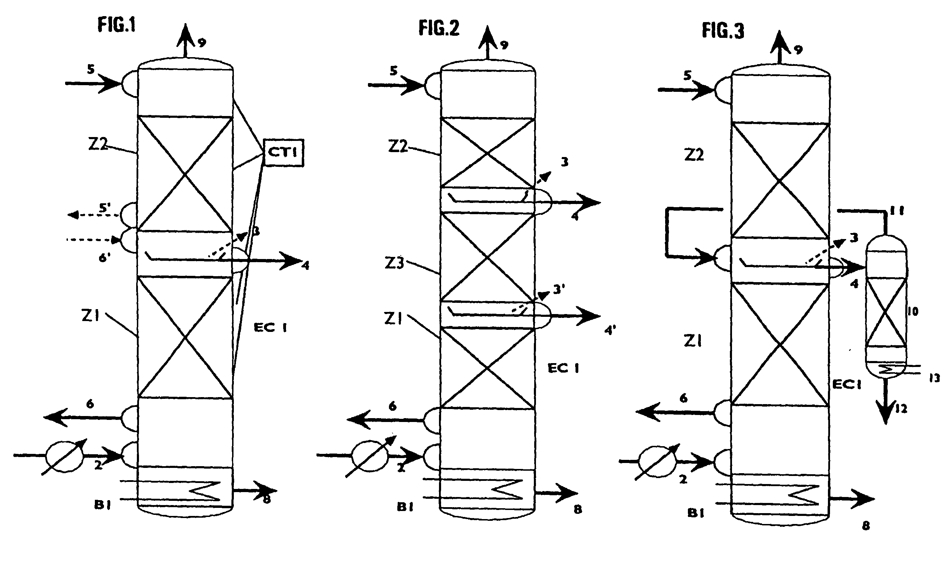

Le principe du procédé est illustré sur la figure 1 et appliqué à titre d'exemple à un gaz naturel renfermant des hydrocarbures autres que le méthane.

Le gaz à traiter est introduit dans une enceinte EC₁ par le conduit 2 situé dans sa partie inférieure.

Il circule dans un premier échangeur de chaleur à plaques Z₁ en liaison avec le conduit d'introduction 2, puis dans un second échangeur de chaleur à plaques Z₂ séparé du premier échangeur par des moyens de récupération (3, 4). Ces moyens permettent notamment d'extraire des hydrocarbures condensés dans l'échangeur Z₂.

Simultanément, il est refroidi par un échange de chaleur indirect, à travers une paroi, par un fluide caloporteur qui pénètre dans la partie supérieure de l'échangeur EC₁ par le conduit 5, circule de haut en bas pour abaisser la température du gaz à traiter et ressort par le conduit 6. Chacun des échangeurs Z₁, Z₂ peut comporter son propre circuit de réfrigération. Le fluide caloporteur du circuit de réfrigération de l'échangeur Z₂ entre par le conduit 5 et ressort par le conduit 5' et celui de l'échangeur Z₁ entre par le conduit 6' et ressort par le conduit 6. Ces fluides caloporteurs peuvent provenir d'une ou de plusieurs sources communes.

Le fluide caloporteur circule de préférence à contre-courant du gaz introduit dans l'échangeur.

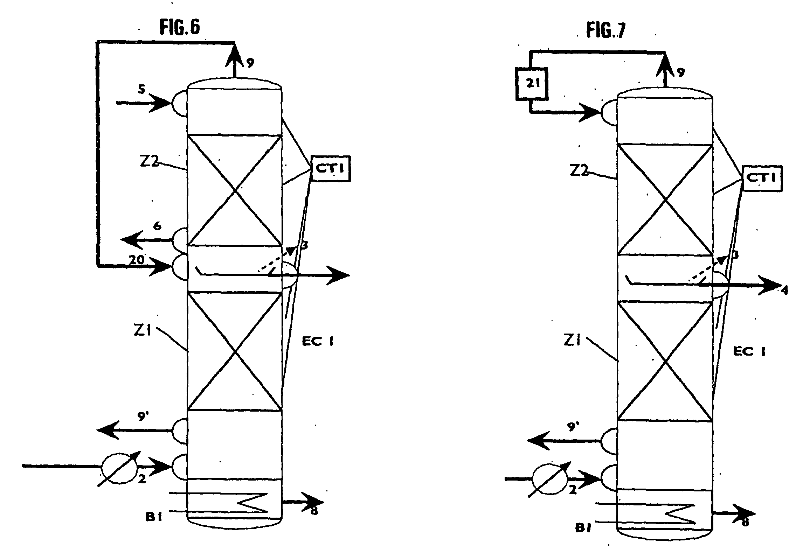

D'autres exemples de réalisation pour le circuit de réfrigération sont décrits aux figures 6 et 7.

Les échangeurs Z₁ et Z₂ sont, de préférence, sensiblement identiques en ce qui concerne leur technologie de réalisation, et comprennent chacun au moins un circuit principal permettant l'échange ou le transfert de matière entre le gaz à traiter circulant de manière ascendante, par exemple, et le ou les constituants condensés au cours du procédé circulant à contre-courant de manière descendante.

La réfrigération provoque la condensation des hydrocarbures lourds contenus dans le gaz. La ou les phases liquides hydrocarbures condensées descendent par gravité, à contre-courant du gaz traité qui s'appauvrit progressivement en composés lourds (C₃+ et supérieurs) du fait de l'échange de matière. Au contraire la phase liquide hydrocarbure condensée s'enrichit au fur et à mesure en constituants plus lourds.

L'abaissement de la température, selon un gradient donné dans l'échangeur, permet de condenser dans des zones distinctes de contact et d'échange thermique les différentes fractions d'hydrocarbures contenues dans le gaz naturel, les fractions les plus lourdes étant recueillies en fond et les fractions les plus légères en tête d'échangeur, par exemple. Il est également possible de récupérer au niveau d'une zone intermédiaire située entre les parties inférieures et supérieures de l'échangeur, une fraction d'hydrocarbure correspondant à un intervalle de température d'ébullition fixé.

Pour récupérer par exemple la fraction GPL, qui comprend le propane et les butanes, et séparément la gazoline représentant la fraction C₅+, le moyen de récupération, est par exemple un plateau 3 communiquant avec les échangeurs de chaleur à plaques Z₁ et Z₂, et avec le ou les circuits d'écoulement du gaz. Sa position à l'intérieur de l'échangeur est déterminée, par exempte, en fonction de la nature des coupes ou hydrocarbures à récupérer et/ou de la température régnant à différents niveaux ou endroits de la colonne.

Les hydrocarbures condensés enrichis en propane et butane récupérés au niveau du plateau 3 sont évacués au moins en partie par le conduit latéral 4.

La phase hydrocarbure liquide du plateau 3 non récupérée, est redistribuée du plateau vers le circuit principal de l'échangeur Z₁ pour s'écouler en descendant avant d'être évacuée, après décantation, par le conduit 8.

Le gaz traité, appauvri en hydrocarbures lourds, est évacué en tête de l'échangeur colonne EC₁ par le conduit 9.

La figure 2 montre un exemple de réalisation selon l'invention où l'échangeur est équipé de deux plateaux de récupération et des conduits reliés à ces derniers respectivement (3, 4) et (3', 4') délimitant trois échangeurs de chaleur à plaques Z₁, Z₂ et Z₃. Les plateaux sont distribués le long de l'échangeur, par exemple, en fonction de la nature des hydrocarbures à récupérer, notamment de leur température de condensation et de la température et/ou du gradient de température présent dans l'échangeur.

Le gradient de température provoqué dans l'échangeur est par exemple choisi en fonction de la nature du gaz et, de la quantité d'hydrocarbures condensés, tels que les GPL et la gazoline, à récupérer.

De même, l'abaissement en température du gaz à traiter, est de préférence réalisé pour obtenir un gradient de température sur l'ensemble de l'échangeur.

Le gaz à traiter peut être prérefroidi avant d'être introduit dans l'échangeur EC₁, à l'aide d'un fluide de réfrigération disponible, tel de l'eau et/ou de l'air dans un échangeur E₁ situé sur le conduit 2. Cette première étape de préréfrigération permet notamment de séparer une fraction gazoline formée par les hydrocarbures condensables dans les conditions de température et de pression établies à la sortie de l'échangeur E₁. Tout autre dispositif permettant de le prérefroidir peut être utilisé sans sortir du cadre de l'invention.

L'échangeur de chaleur EC₁ peut être équipé d'un moyen CT1 de contrôle de la température, par exemple un ou plusieurs capteurs de température reliés par exemple à des moyens de contrôle et de traitement. Ils permettent d'obtenir plusieurs mesures de température le long de l'échangeur de chaleur.

### Exemple 1

Un premier exemple de mise en oeuvre de l'invention, décrit en relation avec la figure 1, permet la récupération sélective des fractions ou coupes d'hydrocarbures contenues dans le gaz naturel, par exemple les hydrocarbures associés renfermant plus de trois atomes de carbone.

Le gaz naturel est refroidi selon le procédé décrit précédemment à la figure 1.

Lors de la réfrigération, le gaz naturel s'appauvrit en constituants lourds C₃+,en formant une phase hydrocarbure liquide qui s'enrichit, tout en s'écoulant, en constituants de plus en plus lourds.

Pour un échangeur-colonne dimensionné par exemple pour obtenir l'équivalent de 12 plateaux théoriques, on remarque que la concentration en propane, isobutane et butane dans la phase hydrocarbure liquide obtenue au niveau du sixième plateau est, par exemple, voisine de 63% masse alors qu'elle est d'environ 20% dans la phase liquide hydrocarbure évacuée en fond de l'équipement par le conduit 8. Cette concentration évoluant tout au long de l'échangeur colonne, il est avantageux de prélever les phases hydrocarbures condensées dans des zones de contact et d'échange thermique choisies.

Le gaz naturel est introduit par le conduit 2 avec un-débit de 42837 Kg/h, avec une température voisine de 43°C, et à une pression sensiblement égale à 4,5 MPa.

Au niveau du plateau de récupération 3, correspondant par exemple au quatrième plateau théorique de l'échangeur, on évacue par le conduit 4, par exemple, 70% de la phase liquide hydrocarbures contenant plus de 25% masse de propane à une température d'environ -2°C, avec un débit sensiblement égal à 3600 Kg/h.

La phase hydrocarbure comportant la majorité des constituants ayant des atomes de carbone supérieurs à C₄+ est évacuée par le conduit 8 avec un débit de 2525 Kg/h. Elle comporte environ 75% d'hydrocarbures C₅+.

Le gaz naturel appauvri de plus de 55% des hydrocarbures en C3+ est évacué en tête d'échangeur avec un débit de 36715 Kg/h par le conduit 9.

La récupération latérale des fractions d'hydrocarbures permet de récupérer une fraction contenant 65% des constituants en C₃ et C₄. La fraction gazoline n'en contient que 20% environ.

D'autre part, en procédant à une récupération latérale des fractions en fonction de leur composition et de leur zone de condensation, on obtient des phases hydrocarbures liquides différentes en composition, l'une riche en constituants en C₃ et C₄ soutirée latéralement, l'autre riche en constituants C₅ et C₆ évacuée en fond de l'équipement et contenant dans leur ensemble moins de méthane et d'éthane que dans le cas d'un procédé selon l'art antérieur. Ceci permet d'augmenter le rendement de production en méthane et éthane.

Avantageusement, les fractions en hydrocarbures récupérées séparément peuvent être stabilisées pour augmenter le rendement en méthane et en éthane du procédé.

Un premier mode de réalisation (figure 1) consiste à utiliser un moyen de chauffage du volume liquide recueilli au fond, par exemple un rebouilleur B₁ intégré dans la partie inférieure de l'échangeur. Ceci permet de stabiliser la fraction de gazoline des composés C₁ et C₂.

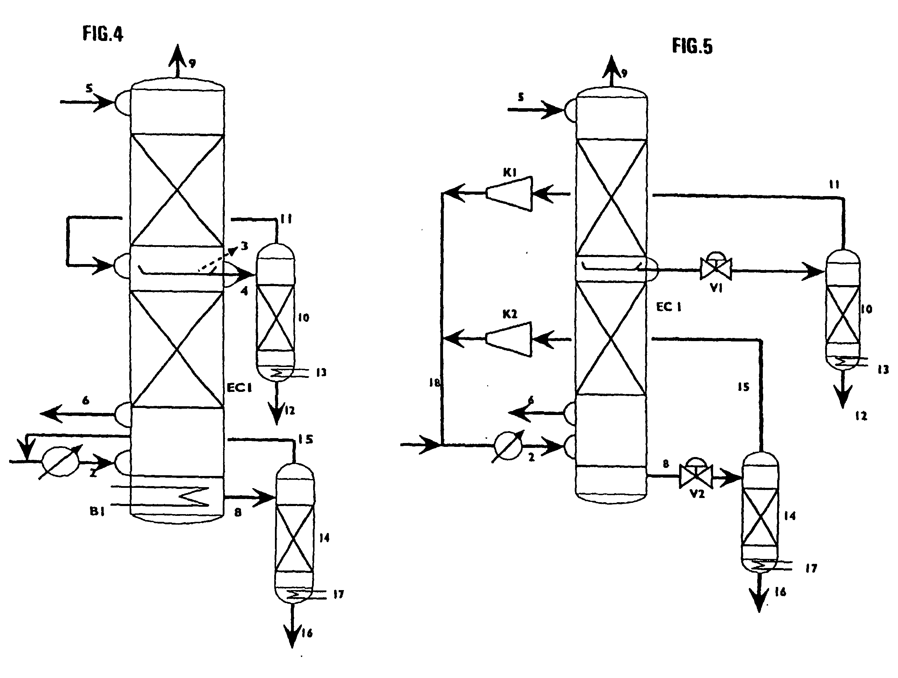

D'autres modes de réalisation pour stabiliser les hydrocarbures condensés et récupérés (GPL et/ou gazoline) sont décrits aux figures 3 à 7.

Sur la figure 3, le conduit d'évacuation 4 communiquant avec le plateau de récupération 3 des GPL condensés de la figure 1 est relié à un dispositif 10 permettant la stabilisation des GPL évacués. Ce dispositif connu de l'homme de l'art ne sera pas décrit en détail.

Le procédé de stabilisation complémentaire consiste à envoyer, dans le dispositif de stabilisation 10, la fraction de condensat comportant du méthane et de l'éthane en faible quantité et formé en majorité par une fraction GPL, récupérée au niveau du plateau 3. La fraction gazeuse riche en méthane et éthane produite lors de la stabilisation est évacuée par un conduit 11 et recyclée vers l'échangeur EC₁ au niveau du plateau 3 pour être récupérée et mélangée avec le gaz à traiter.

La fraction GPL stabilisée est évacuée en fond du dispositif de stabilisation au niveau du rebouilleur 13 par un conduit 12.

Sur la figure 4, l'installation décrite à la figure 3 intègre un deuxième dispositif de stabilisation 14, de la gazoline évacuée par le conduit 8.

Le schéma de fonctionnement est identique à celui décrit en relation avec la figure 3, le condensat évacué par le conduit 8 comportant en majorité de la gazoline est envoyé dans le dispositif de stabilisation 14.

La gazoline stabilisée est évacuée par le conduit 16 au niveau du rebouilleur 17.

La fraction gazeuse composée essentiellement de méthane, d'éthane, de propane et de butane est évacuée du dispositif par le conduit 15 pour être recyclée et mélangée avec le gaz à traiter arrivant par le conduit 2.

Ces manières de procéder permettent avantageusement de stabiliser les fractions GPL et la fraction gazoline, avant leur récupération par le producteur et ainsi d'augmenter le rendement global en méthane et en éthane du procédé.

Il est possible d'améliorer encore la stabilisation des fractions de GPL et de la gazoline produites et séparées au cours du procédé.

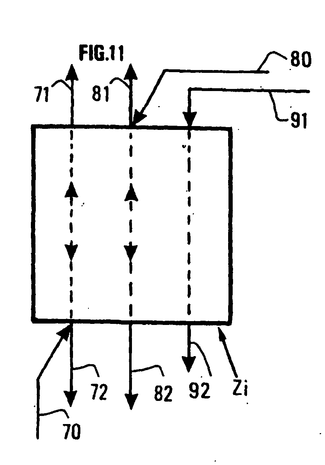

Pour cela, l'installation décrite à la figure 5 diffère de celle de la figure 4 par l'adjonction de deux vannes de détente V₁ et V₂ situées respectivement sur les conduits d'évacuation 4 et 8.

Les fractions gazeuses issues des dispositifs de stabilisation 10 et 14, sont recomprimées au travers des moyens tels des compresseurs K₁ et K₂ avant d'être renvoyées par un conduit 18 vers le gaz à traiter au niveau de la conduite 2.

Avantageusement, le procédé est auto-réfrigéré en partie ou en totalité, c'est-à-dire que la réfrigération est assurée au moins en partie par le gaz traité appauvri en hydrocarbures lourds.

La figure 6 schématise une variante de réalisation dans laquelle, l'échangeur de chaleur EC₁ est muni d'un premier circuit de réfrigération effectué à l'aide d'un fluide caloporteur extérieur, entrant par le conduit 5 et sortant par le conduit 6, les conduits 5 et 6 étant situés dans sa partie supérieure et d'un circuit de réfrigération complémentaire assuré par au moins une partie du gaz traité évacué de l'échangeur par le conduit 9, entrant dans l'échangeur par un conduit 20 situé, de préférence en dessous du conduit d'évacuation 6 du fluide caloporteur, et ressortant par un conduit 9' au niveau de la partie inférieure de l'échangeur.

Le fluide caloporteur extérieur refroidit au moins en partie le gaz circulant dans la partie supérieure de l'échangeur.

Par le conduit 8, on évacue une fraction liquide qui contient en majorité les constituants les plus lourds initialement contenus dans le gaz et condensés au cours du procédé.

Cette fraction liquide peut être stabilisée selon un mode de réalisation décrit ci-dessus aux figures 1, 3, 4 et 5.

Selon un autre mode de réalisation, l'installation est auto-réfrigérée en utilisant comme agent de réfrigération au moins une partie du gaz traité issu du conduit 7.

Un tel cas est illustré par l'exemple de réalisation schématisé sur la figure 7. Le gaz traité sortant en tête d'échangeur EC₁ par le conduit 9 est refroidi dans un dispositif 21, par exemple par détente à travers une vanne ou par détente à travers une turbine. Le gaz ainsi refroidi est réinjecté dans l'échangeur EC₁ dans lequel il abaisse la température du gaz à traiter par échange thermique. Il ressort, après échange thermique, par le conduit 9' avant d'être envoyé, par exemple, vers une autre installation de traitement et/ou vers une conduite de transport.

Le gaz évacué par le conduit 9' peut éventuellement être repris par un dispositif de compression après l'échangeur (non représenté) pour assurer son transfert.

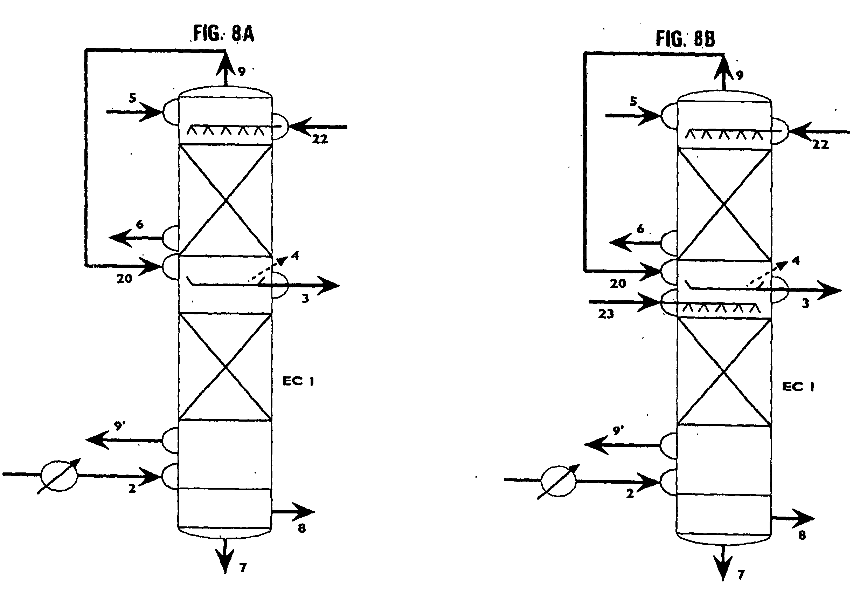

Dans certains cas il est intéressant d'effectuer sur le gaz naturel un traitement autre que le fractionnement selon un schéma décrit par exemple sur la figure 8A.

Ainsi, par injection d'un solvant en quantité déterminée, on réalise la déshydratation du gaz naturel en même temps que son fractionnement.

Pour cela, le dispositif de la figure 6 est muni d'au moins un conduit d'introduction 22 situé de préférence au niveau de la tête de l'échangeur.

A l'intérieur de l'échangeur, le gaz est simultanément
- contacté de préférence à contre-courant et de manière continue avec la phase liquide comportant le solvant circulant dans un sens descendant, et
- refroidi par un échange de chaleur indirect selon un des procédés décrits précédemment.

Cette réfrigération provoque la condensation des hydrocarbures lourds contenus dans le gaz et d'une partie de l'eau de saturation du gaz. Ces deux phases liquides condensées descendent dans le dispositif par gravité, à contre-courant du gaz traité qui s'appauvrit progressivement en constituants lourds (C3+ et supérieurs), du fait de l'échange de matière entre la phase gazeuse et les hydrocarbures liquides.

La phase liquide hydrocarbure condensée s'enrichit au fur et à mesure en constituants plus lourds en descendant et la phase aqueuse condensée riche en solvant en tête de l'échangeur s'appauvrit en solvant par contact avec le gaz.

Après décantation, la phase aqueuse ne contenant pratiquement plus de solvant est évacuée par le conduit 7 et la phase hydrocarbure liquide par le conduit 8.

Le solvant vaporisé et entraîné dans la phase gazeuse permet d'éviter les problèmes de formation d'hydrates liés au refroidissement.

On utilise un solvant au moins partiellement miscible avec l'eau. Il possède une température d'ébullition inférieure à celle de l'eau ou forme avec l'eau un azéotrope dont la température d'ébullition est inférieure à celle de l'eau de manière à pouvoir être entraîné par le gaz non condensé.

Ce solvant est par exemple un alcool et de préférence le méthanol. Il peut aussi être choisi parmi les solvants suivants : méthylpropyléther, éthylpropyléther, dipropyléther, méthyltertiobutyléther, dimethoxyméthane, diméthoxyéthane, éthanol, méthoxyéthanol, propanol ou encore être choisis dans différentes classes de solvants tels que par exemple les amines ou les cétones ou encore un mélange formé à partir d'un ou plusieurs de ces produits.

La quantité de solvant à injecter est habituellement ajustée en fonction de la température, de la pression et/ou de la composition du gaz afin d'éviter la formation d'hydrates et de formation de cristaux de glace dus à la présence de l'eau.

Ainsi, par exemple, le rapport en moles du débit de solvant sur le débit du gaz traité est compris entre 1/1000 et 1/10.

Pour cela on tient compte, par exemple, des valeurs de température et/ou du gradient de température mesurées par les capteurs de température situés au niveau de l'échangeur.

Par circulation à contre-courant, le gaz entraîne le solvant contenu dans les phases liquides qui descendent par gravité. Ces phases liquides sont recueillies en fond, substantiellement épurées de solvant. Le solvant injecté en tête est donc principalement évacué dans la phase gazeuse sortant en tête. La quantité de solvant injecté peut être ainsi ajustée afin d'obtenir le niveau de concentration dans cette phase gazeuse requis pour éviter la formation d'hydrates, compte-tenu des conditions de température et de pression.

La teneur en solvant dans la phase gazeuse est généralement réduite et d'autant plus faible que la température est basse. La quantité de solvant injectée en tête est donc relativement faible et constitue un appoint destiné à compenser les pertes dans le gaz.

Le solvant injecté en tête n'est pas nécessairement pur et peut être, par exemple, mélangé à de l'eau, à condition toutefois que la concentration de solvant en phase aqueuse permette d'éviter la formation d'hydrates.

L'injection d'un solvant permet aussi de séparer des constituants autres que l'eau. On peut ainsi séparer des hydrocarbures insaturés en utilisant un solvant polaire permettant de les absorber de manière sélective. Le solvant est par exemple un éther, un alcool ou une cétone.

Pour éliminer les hydrocarbures présents dans le gaz, on envoie par exemple un solvant formé par une coupe d'hydrocarbures.

La figure 8B décrit un mode de réalisation permettant l'injection d'autres fluides au niveau de l'échangeur, par exemple des solutions contenant un solvant issu d'une autre étape du procédé.

Dans certains cas, il s'avère avantageux de récupérer le solvant pouvant provenir d'une étape de lavage des fractions GPL réalisée à l'extérieur de l'échangeur EC₁ par extraction liquide-liquide avec de l'eau. En effet, la phase hydrocarbure enrichie en propane et butanes extraite par le conduit 4 contient une fraction de solvant. De ce fait, la phase hydrocarbure extraite renfermant des traces du solvant est donc lavée à l'extérieur.

Le plateau 3 est équipé d'au moins un conduit 23 permettant l'injection de cette eau de lavage qui contient au moins en partie le solvant dissous dans la phase hydrocarbure extraite.

Cette eau de lavage est mise en contact à contre-courant avec le gaz à traiter, auquel elle cède par transfert de matière, la quantité de solvant qui se dissout dans le gaz.

Le conduit de réinjection de la phase liquide contenant du solvant à récupérer peut être positionné en tête de l'échangeur et/ou à n'importe quel niveau de cet échangeur.

### Exemple 2

Un second exemple de mise en oeuvre du procédé selon l'invention décrit en relation avec la figure 8A , permet d'obtenir à partir d'un gaz naturel renfermant des hydrocarbures supérieurs associés, un gaz déshydraté largement appauvri en constituants comportant au moins trois atomes de carbone par molécule.

L'échangeur de chaleur EC₁ est par exemple un échangeur de type colonne décrit précédemment à l'exemple 1.

La composition massique du gaz naturel est par exemple la suivante :

| | |
|---|---|
| EAU | 82,30 |
| METHANOL | 0,00 |
| AZOTE | 211,97 |
| DIOXYDE DE CARBONE | 397,79 |
| METHANE | 25765,00 |
| ETHANE | 6028,62 |
| PROPANE | 4360,50 |
| ISOBUTANE | 1335,05 |
| BUTANE | 487,21 |
| ISOPENTANE | 668,81 |
| PENTANE | 528,87 |
| HEXANE | 1053,47 |
| TOTAL KG/HR | 42919,59 |

Le gaz naturel est introduit par le conduit 2 avec un débit d'environ 42920 Kg/h, avec une température voisine de 43°C, et à une pression sensiblement égale à 4,5 MPa. La quantité de méthanol injecté par le conduit 22 est, par exemple de 13,9 Kg/h pour maintenir un gradient de concentration en méthanol dans la phase aqueuse formée dans l'échangeur correspondant à une concentration variant de 99% en fraction massique en tête de l'échangeur à une température de -23°C et à une concentration de 0,01% en fraction massique en fond de l'échangeur pour une température d'environ 43°C.

Au niveau des moyens de récupération 3 et 4 (exemple 1), correspondant par exemple au quatrième plateau théorique de l'échangeur, on évacue, par le conduit 4, 70% de la phase liquide hydrocarbures contenant plus de 25% masse de propane à une température d'environ -2°C et avec un débit sensiblement égal à 3600 Kg/h.

La phase aqueuse et la phase hydrocarbure comportant la majorité des constituants ayant des atomes de carbone supérieurs à C₄+ sont évacuées après décantation par le conduit 8.

La phase hydrocarbure liquide, comportant notamment des hydrocarbures en C₅+, qui est évacuée par le conduit 8 avec un débit de 2525 Kg/h, renferme plus de 75 % des hydrocarbures en C₅+.

Le gaz naturel déshydraté et appauvri en hydrocarbures condensables est évacué par le conduit 9 avec un débit d'environ 36715 Kg/h. Il est appauvri de plus de 55% des hydrocarbures en C₃+ et épuré pratiquement en totalité des composés en C5+.

Différentes technologies, connues de l'homme de métier, peuvent être employées pour réaliser l'échangeur, et les moyens ou dispositifs associés, parmi lesquelles certaines sont décrites ci-après à titre d'exemples non limitatifs.

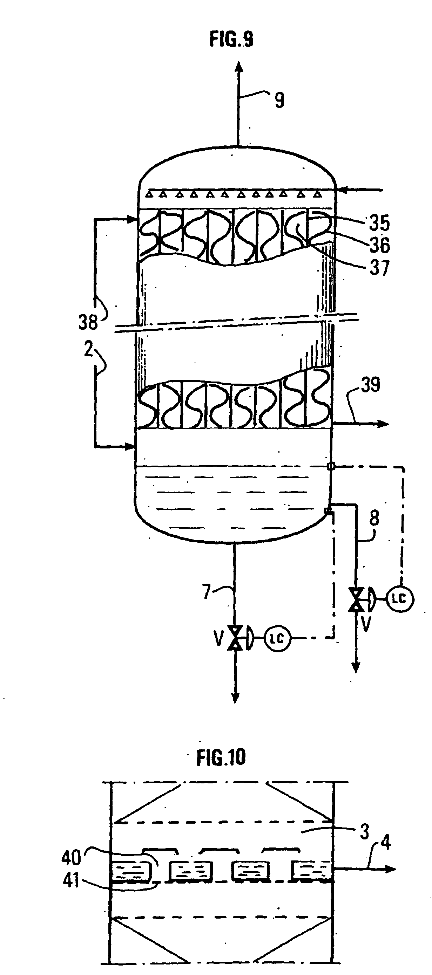

L'échangeur EC₁ est un échangeur à plaques, par exemple en aluminium brasé, tel que celui qui est schématisé sur la figure 9.

Un tel échangeur est constitué par un assemblage de plaques planes 35 entre lesquelles se trouvent des plaques intercalaires ondulées 36 qui permettent de maintenir mécaniquement l'assemblage et d'améliorer le transfert thermique.

Ces plaques délimitent des canaux 37 dans lesquels circulent les fluides participant au cours du procédé à l'échange thermique.

Le gaz à traiter introduit dans l'échangeur par le conduit 2 circule dans les canaux 37 dans une direction ascendante en étant refroidi au fur et à mesure par le fluide caloporteur. Les plaques intercalaires ondulées 36, jouant le rôle d'un garnissage structuré, favorisent le contact entre le gaz qui monte et les fractions liquides qui descendent.

Le solvant envoyé par le conduit 22, dans le cas des procédés simultanés de déshydratation et de fractionnement, est distribué uniformément au dessus des canaux 37 dans lesquels circule le gaz à traiter.

Dans le cas d'un procédé auto-réfrigéré, le gaz déshydraté est évacué en tête d'échangeur par le conduit 9, refroidi par détente, selon un procédé par exemple décrit à la figure 7 et réintroduit au niveau de la partie supérieure de l'échangeur par le conduit 38 qui arrive sensiblement perpendiculairement au plan de la coupe représentée sur la figure 9 dans une enceinte d'alimentation des canaux non représentée sur la figure. Il est évacué après échange thermique par le conduit 39 qui ressort perpendiculairement au plan de la coupe représentée sur la figure 10, le conduit étant relié à une enceinte d'évacuation des canaux non représentée sur la figure. Les enceintes d'alimentation et d'évacuation sont des dispositifs connus de l'homme de métier permettant le passage des fluides circulant dans chacun des canaux dans le conduit d'évacuation et inversement de distribuer le fluide provenant d'un conduit dans les différents canaux.

La phase hydrocarbure liquide, éventuellement stabilisée par le rebouilleur B₃, est évacuée sous contrôle de niveau (LC, V) par le conduit 8 et la phase aqueuse est évacuée sous contrôle de niveau par le conduit 7.

D'autres types d'échangeurs à plaques peuvent être également utilisés, par exemple des échangeurs à plaques en acier inoxydables soudées entre elles, soit bord à bord, soit sur toute leur surface par exemple par une technique de soudage par diffusion.

Les plaques peuvent aussi être formées par explosion ou gravées chimiquement.

Il est bien entendu que sans sortir du cadre de l'invention, l'homme de métier fera appel à toutes les techniques connues et disponibles pour améliorer le contact entre les phases et/ou la distribution des fluides.

La figure 10 schématise un exempte de réalisation d'un plateau permettant de prélever des phases en fonction de leur nature selon un procédé décrit à la figure 4, par exemple.

Le plateau 3 comporte des cheminées 40 permettant au gaz de remonter vers la partie supérieure de l'échangeur. La phase liquide qui est recueillie sur ce plateau peut être évacuée par le conduit 4 avec un débit contrôlé, mais peut également s'écouler par débordement vers la partie inférieure de l'échangeur. Il est ainsi possible de ne recueillir qu'une fraction de la phase liquide arrivant de la partie supérieure de l'échangeur.

Si deux phases liquides sont prélevées sur le plateau, par exemple une phase hydrocarbure liquide et une phase aqueuse, il est possible de les évacuer au moins en partie séparément. La phase aqueuse qui est plus lourde tend à s'accumuler au fond du plateau et il est possible de l'évacuer par exemple à travers des perforations 41 aménagées dans le plateau.

Tout autre mode d'évacuation de l'une ou l'autre des phases connu de l'homme de l'art pourra être utilisé pour sans sortir du cadre de l'invention.

De manière générale, toute technologie d'échange thermique peut être utilisée à condition de permettre :
- des échanges thermiques à contre-courant,
- la circulation indépendante de plusieurs fluides pouvant être amenés et évacués indépendamment.

Un échangeur de chaleur à plaques Zi doit pouvoir ainsi être opéré selon le schéma de la figure 11 en assurant simultanément le passage :
- d'une ou plusieurs fractions gazeuses arrivant par le conduit 70, circulant à contre-courant d'une phase liquide générée par refroidissement dans l'échangeur Zi, en produisant une fraction gazeuse évacuée en tête de l'échangeur Zi par le conduit 71 et une fraction liquide évacuée en fond de l'échangeur Zi par le conduit 72,
- d'une ou plusieurs fractions liquides arrivant par le conduit 80, circulant à contre-courant d'une phase vapeur générée par chauffage dans l'échangeur Zi, en produisant une fraction gazeuse évacuée en tête de l'échangeur Zi par le conduit 81 et une fraction liquide évacuée en fond de l'échangeur Zi par le conduit 82,
- d'un ou plusieurs fluides contribuant au refroidissement ou au chauffage de l'échangeur Zi par un exemple un fluide de refroidissement peut arriver par le conduit 91 en tête de l'échangeur Zi et être évacuée par le conduit 92 en fond de l'échangeur Zi.

## Revendications

1. Procédé de fractionnement d'un gaz naturel comportant de l'eau, du méthane et des hydrocarbures condensables, **caractérisé en ce que** :
- on introduit le gaz naturel dans un premier échangeur de chaleur à plaques (Z1), le gaz circulant en direction ascendante,
- dans le premier échangeur (Z1), on refroidit le gaz par échange de chaleur indirect pour provoquer la condensation d'une première fraction liquide et, simultanément, ledit gaz est en contact avec la première fraction liquide et avec une partie d'une quatrième fraction liquide provenant d'un deuxième échangeur de chaleur à plaques (Z2), la première fraction liquide et ladite partie de la quatrième fraction liquide circulant à contre-courant du gaz,
- on soutire, une troisième fraction liquide en fond du premier échangeur (Z1) et une première fraction gazeuse en tête du premier échangeur (Z1),
- on introduit la première fraction gazeuse dans le deuxième échangeur (Z2). la première fraction gazeuse circulant en direction ascendante,
- dans le deuxième échangeur (Z2), on refroidit la première fraction gazeuse pour provoquer la condensation d'une deuxième fraction liquide et, simultanément, ladite première fraction gazeuse est en contact avec ladite deuxième fraction liquide, la première fraction gazeuse circule à contre-courant de la deuxième fraction liquide,
- on soutire, la quatrième fraction liquide d'une partie du liquide en fond du deuxième échangeur (Z2) et une deuxième fraction gazeuse en tête du deuxième échangeur (Z2).

2. Procédé selon la revendication 1 **caractérisé en ce que** le refroidissement est réalisé par échange de chaleur indirect entre un fluide caloporteur et le gaz circulant dans le premier et deuxième échangeur de chaleur, ledit fluide caloporteur circulant à contre courant dudit gaz.

3. Procédé selon la revendication 2 **caractérisé en ce que** ledit fluide caloporteur consiste en ladite deuxième fraction gazeuse.

4. Procédé selon l'une des revendications 1 à 3 **caractérisé en ce qu'**on injecte un solvant dans au moins un des échangeurs de chaleur.

5. Procédé selon l'une des revendications 1 à 4 **caractérisé en ce qu'**on effectue un traitement permettant de stabiliser au moins une des fractions liquides prélevées, en la débarrassant des hydrocarbures les plus légers.

## Patentansprüche

1. Verfahren zur Fraktionierung eines Wasser, Methan und kondensierbare Kohlenwasserstoffe umfassenden Erd- oder Naturgases, **dadurch gekennzeichnet, dass**:
a. man das Erdgas in einen ersten Plattenwärmeaustauscher (Z1) einführt, wobei das Gas in aufsteigender Richtung zirkuliert,
b. in dem ersten Wärmeaustauscher (Z1) man das Gas durch indirekten Wärmeaustausch kühlt, um die Kondensation einer ersten flüssigen Fraktion hervorzurufen und gleichzeitig das Gas in Kontakt mit der ersten flüssigen Fraktion und mit einem Teil einer vierten flüssigen Fraktion, die aus einem zweiten Plattenwärmeaustauscher (Z2) stammt, zu bringen, wobei die erste flüssige Fraktion und dieser Teil der vierten flüssigen Fraktion im Gegenstrom zum Gas strömt,
c. man eine dritte flüssige Fraktion am Boden des ersten Wärmeaustauschers (Z1) und eine erste gasförmige Fraktion am Kopf des ersten Wärmeaustauschers (Z1) abzieht,
d. man die erste gasförmige Fraktion in den zweiten Wärmeaustauscher (Z2) einführt, wobei die erste gasförmige Fraktion in aufsteigender Richtung strömt,
e. man im zweiten Wärmeaustauscher (Z2) die erste gasförmige Fraktion kühlt, um die Kondensation einer zweiten flüssigen Fraktion hervorzurufen, wobei gleichzeitig die erste gasförmige Fraktion in Kontakt mit dieser zweiten flüssigen Fraktion steht und die erste gasförmige Fraktion im Gegenstrom zur zweiten flüssigen Fraktion strömt und
f. man die vierte flüssige Fraktion aus einem Teil der Flüssigkeit am Boden des zweiten Wärmeaustauschers (Z2) und eine zweite gasförmige Fraktion am Kopf des zweiten Wärmeaustauschers (Z2) abzieht.

2. Verfahren nach Anspruch 1, **dadurch gekennzeichnet, dass** die Kühlung durch indirekten Wärmeaustausch zwischen einem Wärmeträgerfluid und dem im ersten und zweiten Wärmeaustauscher zirkulierenden Gas vorgenommen wird, wobei das Wärmeträgerfluid im Gegenstrom zu diesem Gas strömt.

3. Verfahren nach Anspruch 2, **dadurch gekennzeichnet, dass** dieses Wärmeträgerfluid aus dieser zweiten gasförmigen Fraktion besteht.

4. Verfahren nach einem der Ansprüche 1 bis 3, **dadurch gekennzeichnet, dass** man ein Lösungsmittel in wenigstens einen der Wärmeaustauscher einführt oder einspritzt.

5. Verfahren nach einem der Ansprüche 1 bis 4, **dadurch gekennzeichnet, dass** man eine Behandlung vornimmt, die es ermöglicht, wenigstens eine der entnommenen flüssigen Fraktionen zu stabilisieren, indem man sie von den leichtesten Kohlenwasserstoffen befreit.

## Claims

1. Process for fractionating of a natural gas comprising water, methan and condensable hydrocarbons, **characterized in that**:
- introducing the natural gas in a first plate heat-exchanger (Z1 ), the gas circulating in a upwardly flow,
- in the first heat exchanger (Z1), cooling the gas by indirect heat exchange in order to cause condensation of a first liquid fraction and, simultaneously, said gas is into contact with the first liquid fraction and with a part of a fourth liquid fraction coming from a second plate heat - exchanger(Z2), the first liquid fraction and said part of fourth liquid fraction circulating in a countercurrent flow in relation to the gas,
- drawing-off, a third liquid fraction at the bottom of the first heat-exchanger (Z1 ) and a first gaseous fraction at the head of the first exchanger (Z1),
- introducing the first gaseous fraction in the second exchanger (Z2), the first gaseous fraction circulating in a upwardly flow,
- in the second exchanger (Z2), cooling the first gaseous fraction in order to cause condensation of a second liquid fraction and, simultaneously, said first gaseous fraction is into contact with said second liquid fraction, the first gaseous fraction circulates in a countercurrent flow in relation to the second liquid fraction,
- drawing off, the fourth liquid fraction from a part of liquid on the bottom of the second exchanger (Z2) and a second gaseous fraction on the head of the second exchanger (Z2).

2. Process according to claim 1 **characterized in that** the cooling is performed by indirect heat exchange between a coolant fluid and the gas circulating in the first and second heat-exchangers, said coolant fluid circulating in countercurrent flow in relation to said gas.

3. Process according to claim 2 **characterized in that** the coolant fluid consists of said second gaseous fraction.

4. Process according to one of claims 1 to 3 **characterized in that** a solvant is injected in at least one of the heat exchangers.

5. Process according to one of claims 1 to 4 **characterized in that** a treatment allowing to stabilize at least one of the drawn off liquid fractions, by clearing thereof of the lighter hydrocarbons, is performed.
